(19) Europäisches Patentamt
European Patent Office
Office européen des brevets

(11) **EP 3 957 422 A1**

(12) **EUROPEAN PATENT APPLICATION**
published in accordance with Art. 153(4) EPC

(43) Date of publication:
**23.02.2022 Bulletin 2022/08**

(21) Application number: **19924801.4**

(22) Date of filing: **06.12.2019**

(51) International Patent Classification (IPC):
**B23C 3/14** (2006.01)     **B23C 5/10** (2006.01)
**B23Q 17/20** (2006.01)     **B23Q 15/013** (2006.01)

(52) Cooperative Patent Classification (CPC):
**B23C 3/14; B23C 5/10; B23Q 15/013; B23Q 17/20**

(86) International application number:
**PCT/JP2019/047824**

(87) International publication number:
**WO 2020/213206 (22.10.2020 Gazette 2020/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.04.2019   JP 2019079581**

(71) Applicant: **JFE Steel Corporation
Tokyo 100-0011 (JP)**

(72) Inventors:
• **WATANABE Taku
Tokyo 100-0011 (JP)**
• **YAMASHITA Koji
Tokyo 100-0011 (JP)**
• **FUJIKI Shotaro
Tokyo 100-0011 (JP)**

(74) Representative: **Hoffmann Eitle
Patent- und Rechtsanwälte PartmbB
Arabellastraße 30
81925 München (DE)**

(54) **SLAB SURFACE MAINTENANCE METHOD**

(57)     Provided is a slab surface repairing method that can reliably cut off surface flaws and the like while reducing the cut amount and the number of strokes of the cutting tool to a minimum.

When cutting a slab side surface of a slab that is placed on a bed by using a cutting tool that moves in a longitudinal direction thereof, the cutting tool including a cutting edge at a peripheral part of a substantially cylindrical body and rotating about a substantially cylindrical shaft, at each of positions x that are set at predetermined intervals, a minimum cut amount, which is a cut amount that is minimally necessary for surface repair, is set beforehand regarding cut amounts at a plurality of positions on the slab side surface in height direction, and at each position x, a cutting tool cut-in position such that the cut amounts at the plurality of positions in the height direction are each greater than or equal to the minimum cut amount and a cut-off sectional area due to the cutting tool is minimum or close to minimum is determined, and a movement path of the cutting tool is controlled.

FIG. 12

EP 3 957 422 A1

## Description

Technical Field

The present invention relates to a method of repairing a surface of a slab that is performed to remove oxide scale and surface flaws that occur on the surface of the slab.

Background Art

In general, a steel sheet and a steel plate are produced by hot rolling or cold rolling a continuously cast slab or a bloomed slab (hereafter, simply referred to as "slab"). At this time, if rolling is performed while an oxide scale layer and surface flaws remain on a slab surface, the oxide scale layer and the surface flaws may cause impairment of the surface quality and cracking of a product.

On the other hand, a slab tends to have a nonuniform shape and a comparatively complex surface shape, because the slab has a curl, a bend, a bulge, a depression, and the like due to a nonuniform thermal stress in a cooling process during production.

With existing technology, as described in Patent Literatures 1 and 2, by using a machine tool such as a plano miller or a portal milling machine, slab surface repair is performed to remove an oxide scale layer and surface flaws on a slab surface by cutting the slab surface by using a milling cutter in accordance with a slab surface shape measured beforehand (milling process).

With such a method of repairing a slab surface using a milling cutter, cutting of the entire slab surface is performed by repeating the following process: after performing a movement (hereafter, referred to as "stroke") of cutting the slab surface by moving the milling cutter from one end to the other end of the slab (for example, from the front end to the back end in the slab longitudinal direction, or from the right end to the left end in the slab width direction), the milling cutter is moved in a cutter width direction (a horizontal direction perpendicular to the movement direction of the milling cutter), and the next stroke is performed. In the cutting process, as described above, the milling cutter is moved so as to follow a slab surface shape measured beforehand.

Citation List

Patent Literature

PTL 1: Japanese Unexamined Patent Application Publication No. 9-108725
PTL 2: Japanese Unexamined Patent Application Publication No. 2016-68251

Summary of Invention

Technical Problem

As described above, a slab generally has a comparatively complex surface shape. Irrespective of the slab surface shape, in surface repair of a slab, it is necessary to cut the slab surface so that no uncut part remains. On the other hand, in surface repair of a slab, for example, it is required to reduce the cut amount of a slab surface to a minimum from the viewpoint of economy and to reduce the number of strokes of a cutting tool from the viewpoint of productivity.

However, as in the surface repairing methods described in Patent Literatures 1 and 2, a method of simply cutting a slab surface by determining the path of a milling cutter in accordance with a slab surface shape measured beforehand has a problem in that, in order to cut the slab surface so that the cut amount is small and no uncut part remains, the number of strokes of the cutting tool increases and the productivity decreases.

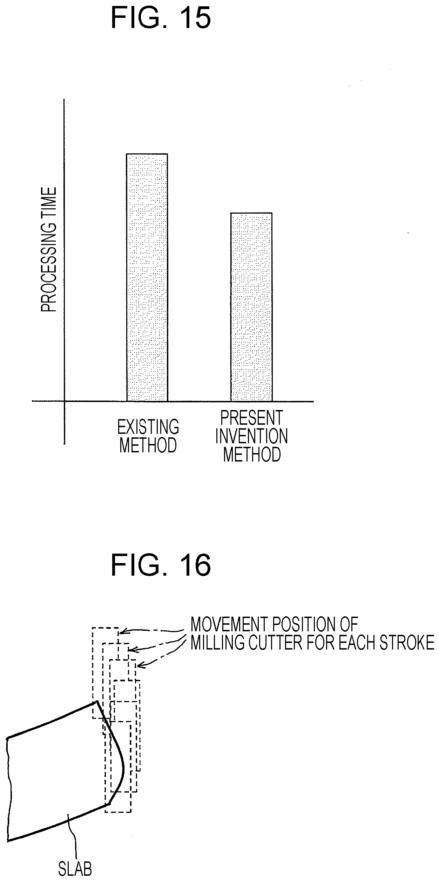

Fig. 16 (a figure illustrating a part of a section of a slab in the width direction) illustrates the movement path of a tool (the movement position of the tool at each stroke) in a case of repairing a slab side surface by using an existing slab surface repairing method. As illustrated in the figure, it is necessary to increase the number of strokes of the milling cutter so that no uncut part remains for a complex slab surface shape. As a result, the processing time increases and the productivity decreases.

Accordingly, an object of the present invention is to solve the above problem of the existing technology and to provide, in a method of repairing a side surface of a slab by cutting, a method of repairing a surface of a slab that can reliably cut off oxide scale and surface flaws on the surface of the slab so that no uncut part remains while reducing the cut amount and the number of strokes of a cutting tool to a minimum.

Solution to Problem

The inventors have examined exhaustively to solve the above problem, and conceived of an idea of a new method of controlling the movement path of a cutting tool under predetermined conditions by using a substantially cylindrical cutting tool including a cutting edge in an outer peripheral part thereof. That is, the gist of present invention for solving the above problem is as follows.

[1] A method of repairing a surface of a slab, in which, when cutting a slab side surface (s) of a slab that is placed on a bed by using a cutting tool that moves in a longitudinal direction thereof, the cutting tool including a cutting edge at a peripheral part of a substantially cylindrical body and rotating about a substantially cylindrical shaft; in a case where the longitudinal direction of the slab side surface (s) is defined as an X-axis direction, a horizontal direction perpendicular to the X-axis direction is defined as a Y-axis direction, and a height direction of the slab side surface (s) is defined as a Z-axis direction; at each of positions (x) that are set at predetermined intervals in the X-axis direction, a minimum cut amount, which is a cut amount that is minimally necessary for surface repair, is set beforehand regarding cut amounts at a plurality of positions on the slab side surface (s) in the Z-axis direction; and at each position (x), a cutting tool cut-in position in the Y-axis direction such that the cut amounts at the plurality of positions in the Z-axis direction are each greater than or equal to the minimum cut amount and a cut-off sectional area in the Y-axis direction due to the cutting tool is minimum or close to minimum is determined, and a movement path of the cutting tool is controlled.

[2] A method of repairing a surface of a slab, in which: in performing shape measurement of the slab side surface (s), at each of measurement positions (x) that are set at the predetermined intervals in the X-axis direction, a plurality of measurement points (a) at predetermined intervals in the Z-axis direction are set beforehand, and a minimum cut amount AEmin, which is a cut amount that is minimally necessary for surface repair, is set regarding a cut amount at each of the measurement points (a); and

at each measurement position (x), Y-axis coordinates of the plurality of measurement points (a), which are set at the predetermined intervals in the Z-axis direction, are obtained by measurement using a distance-measuring device; a cutting tool cut-in position in the Y-axis direction such that a cut amount $AEi$ at each measurement point (a) is greater than or equal to a minimum cut amount AEmin and a cut-off sectional area $Tai$ in the Y-axis direction due to the cutting tool is minimum or close to minimum is determined based on the Y-axis coordinate of each measurement point (a) and a known Y-axis coordinate of the cutting tool; and a movement path of the cutting tool in the X-axis direction and the Y-axis direction is controlled so that the cutting tool is located at the cutting tool cut-in position at each measurement position (x).

[3] The method of repairing a surface of a slab described in [2], in which at each measurement position (x), the cutting tool cut-in position in the Y-axis direction is determined through the following steps (i) to (iii), and the movement path of the cutting tool in the X-axis direction and the Y-axis direction is controlled so that the cutting tool is located at the cutting tool cut-in position at each measurement position (x).

(i) The Y-axis coordinates of the plurality of measurement points (a) that are set at the predetermined intervals in the Z-axis direction are obtained by measurement using the distance-measuring device.

(ii) A cut amount $AE_{ip}$ at each of other measurement points $(a_p)$ when a cut amount $AE_{ij}$ at an arbitrary measurement point $(a_j)$ is assumed to be a predetermined minimum cut amount AEmin is obtained based on the Y-axis coordinate of each measurement point (a) obtained in (i) and the known Y-axis coordinate of the cutting tool, and, in a case where each cut amount $AE_{ip}$ is greater than or equal to the predetermined minimum cut amount AEmin, the cut-off sectional area $Ta_i$ in the Y-axis direction due to the cutting tool is obtained based on the cut amount $AE_{ij}$ at the measurement point $(a_j)$ and the cut amount $AE_{ip}$ at each of the other measurement points $(a_p)$.

(iii) The cut-off sectional area $Ta_i$ in each case is obtained by performing calculation in (ii) regarding all of the measurement points (a), and a cutting tool cut-in position in a case where the cut-off sectional area $Ta_i$ is minimum or close to minimum is determined as a cutting tool cut-in position at the measurement position (x).

[4] The method of repairing a surface of a slab described in any one of [1] to [3], in which a slab side surface region between a position of a slab upper surface and a slab thickness center portion or a position near a lower part thereof in the Z-axis direction is cut with one-stroke movement of the cutting tool.

[5] The method of repairing a surface of a slab described in [2] or [3], in which: a slab side surface region between a position of a slab upper surface and a slab thickness center portion or a position near a lower part thereof in the Z-axis direction is cut with one-stroke movement of the cutting tool; among the plurality of measurement points (a) that are set at the predetermined intervals in the Z-axis direction, an uppermost measurement point $(a_{01})$ and a lowermost measurement point $(a_{02})$ are imaginary measurement points for calculation and other measurement

points $(a_1)$ to $(a_n)$ are actual measurement points; the uppermost measurement point $(a_{01})$ is located at or near the slab upper surface in the Z-axis direction, and a Y-axis coordinate thereof is set on an extension line of a straight line that connects, among the actual measurement points $(a_1)$ to $(a_n)$, an uppermost measurement point $(a_1)$ and a measurement point $(a_2)$ that is second from a top; and the lowermost measurement point $(a_{02})$ is located at or near the slab thickness center portion in the Z-axis direction, and a Y-axis coordinate thereof is set on an extension line of a straight line that connects, among the actual measurement points $(a_1)$ to $(a_n)$, a lowermost measurement point $(a_n)$ and a measurement point $(a_{n-1})$ that is second from a bottom.

[6] The method of repairing a surface of a slab described in any one of [2], [3], and [5], in which a minimum cut amount AEmin at each measurement point (a) is a cut amount that is minimally necessary to prevent generation of an uncut part in surface repair of the slab side surface (s) and is a cut amount that is set based on an empirical rule or/and a preliminary research.

[7] The method of repairing a surface of a slab described in any one of [2], [3], [5], and [6], in which, among the plurality of measurement points (a) that are set at the predetermined intervals in the Z-axis direction, a minimum cut amount AEmin of an uppermost measurement point (a) is greater than a minimum cut amount AEmin of other measurement points (a).

[8] The method of repairing a surface of a slab described in any one of [2], [3], and [5] to [7], in which a distance between the measurement points (a) that are adjacent to each other in the Z-axis direction is 50 mm or less.

[9] The method of repairing a surface of a slab described in any one of [2], [3], and [5] to [8], in which the number of measurement points (a) at each measurement position (x) is three or more.

[10] The method of repairing a surface of a slab described in any one of [2], [3], and [5] to [9], in which a distance between the measurement positions (x) that are adjacent to each other in the X-axis direction is 100 mm or less.

[11] The method of repairing a surface of a slab described in any one of [1] to [10], in which an effective cutting length portion of a cutting tool has an inverted conical frustum shape.

[12] The method of repairing a surface of a slab described in any one of [1] to [11], in which, in the Z-axis direction, [a height of an upper end of an effective cutting length portion of the cutting tool] $\geq$ [a height of a slab upper surface] and [a height of a lower end of the effective cutting length portion of the cutting tool] $\leq$ [a height of a slab thickness center portion].

Advantageous Effects of Invention

With the slab surface repairing method according to the present invention, when performing surface repair of a slab side surface by cutting, it is possible to reliably cut off oxide scale and surface flaws on a slab surface so that no uncut part remains while reducing the cut amount and the number of strokes of a cutting tool to a minimum. Therefore, it is possible to perform a slab surface repairing operation economically and with high productivity. Brief Description of Drawings

[Fig. 1] Fig. 1 illustrates a slab side surface that is to be cut by using a slab surface repairing method according to the present invention, a plurality of measurement positions x in the X-axis direction for measuring the shape of the slab side surface, and a plurality of measurement points a in the Z-axis direction at each measurement position x.

[Fig. 2] Fig. 2 illustrates a plurality of measurement points a at predetermined intervals in the Z-axis direction at a certain measurement position x (the figure showing a slab section in the Y-axis direction) in an embodiment of the present invention.

[Fig. 3] Fig. 3 schematically illustrates irregularity in shape in the Z-axis direction at a certain measurement position x (the figure showing a slab section in the Y-axis direction), regarding a slab side surface that is to be cut by using the slab surface repairing method according to the present invention.

[Fig. 4] Fig. 4 schematically illustrates irregularity in shape in the X-axis direction, regarding a slab side surface that is to be cut by using the slab surface repairing method according to the present invention.

[Fig. 5] Fig. 5 illustrates an embodiment of a slab surface repairing apparatus that is used in the present invention and a situation in which a slab surface is being repaired by using the apparatus.

[Fig. 6] Fig. 6(a) is a perspective view and Fig. 6(b) is a longitudinal sectional view each illustrating a cutting tool (effective cutting length portion) of the slab surface repairing apparatus of Fig. 5.

[Fig. 7] Fig. 7 illustrates a model for measuring the shape of a slab side surface to be cut in an embodiment of the present invention.

[Fig. 8] Fig. 8 illustrates the definitions of the coordinates of imaginary measurement points, among a plurality of measurement points a at predetermined intervals in the Z-axis direction at a certain measurement position x, and an example of a method of calculating the coordinates in an embodiment of the present invention.

[Fig. 9] Fig. 9 illustrates the defining parameters of a cutting tool shape in an embodiment of the present invention.

[Fig. 10] Fig. 10 illustrates an overview of tool height position parameters for determining the Z-axis coordinate $Zt_0$ of a tool height reference line in an embodiment of the present invention.

[Fig. 11] Fig. 11 illustrates an algorithm for determining a tool height position in an embodiment of the present invention.

[Fig. 12] Fig. 12 illustrates a model of a situation when a cutting tool is cut into a Y-axis direction slab section at a certain measurement position x in an embodiment of the present invention.

[Fig. 13] Fig. 13 illustrates an example of calculation of (a method of calculating) a cut-off sectional area $Ta_i$, in the Y-axis direction, to be cut by a cutting tool in an embodiment of the present invention.

[Fig. 14] Fig. 14 is a flowchart of a method for determining the cut-in amount (tool position) of a cutting tool at a certain measurement position x in an embodiment of the present invention.

[Fig. 15] Fig. 15 is a graph illustrating a comparison of slab surface repair time (processing time) between an existing slab surface repairing method and the slab surface repairing method according to the present invention.

[Fig. 16] Fig. 16 illustrates the movement path of a tool in a case of repairing a slab side surface by using an existing slab surface repairing method with a milling cutter.

Description of Embodiments

A slab surface repairing method according to the present invention is used to repair a slab side surface s. The slab side surface s has depressions and variation in shape due to various factors, and has a large irregularity in shape in the height direction and the longitudinal direction. As described above, in surface repair of a slab, it is required that the cut amount of a slab surface be small from the viewpoint of economy and that the number of strokes of a cutting tool be small from the viewpoint of productivity. On the other hand, it is required to reliably cut off oxide scale and surface flaws because, if oxide scale and surface flaws are left uncut, it is necessary to perform cutting again, resulting in a considerable time loss. Therefore, in a slab surface repairing method according to the present invention, as described below, instead of an existing milling cutter, a substantially cylindrical cutting tool that performs cutting with a cutting edge at a peripheral part is used, and cutting of a slab side surface is performed by controlling the cutting tool along a movement path such that the cut amount is minimum and no uncut part remains.

In the slab surface repairing method according to the present invention, a slab side surface s of a slab that is placed on a bed is cut by using a cutting tool that moves in a longitudinal direction thereof, the cutting tool including a cutting edge at a peripheral part of a substantially cylindrical body and rotating about a substantially cylindrical shaft. At this time, in a case where the longitudinal direction of the slab side surface s is defined as an X-axis direction, a horizontal direction perpendicular to the X-axis direction is defined as a Y-axis direction, and a height direction of the slab side surface s is defined as a Z-axis direction, at each of positions x that are set at predetermined intervals in the X-axis direction, a minimum cut amount, which is a cut amount that is minimally necessary for surface repair, is set beforehand regarding cut amounts at a plurality of positions on the slab side surface s in the Z-axis direction. At each position x, a cutting tool cut-in position in the Y-axis direction such that the cut amounts at the plurality of positions in the Z-axis direction are each greater than or equal to the minimum cut amount and a cut-off sectional area in the Y-axis direction due to the cutting tool is minimum or close to minimum is determined, and a movement path of the cutting tool is controlled. As described above, most preferably, the cutting tool cut-in position in the Y-axis direction determined at each position x is a cutting tool cut-in position such that the cut-off sectional area in the Y-axis direction due to the cutting tool is minimum. However, if it is not possible to do so for some reason, the cutting tool cut-in position may be a position such that the cut-off sectional area is close to minimum as described above.

Thus, regardless of the shape of the slag side surface, it is possible to reliably cut off oxide scale and surface flaws on the slab side surface s so that no uncut part remains while reducing the cut amount and the number of strokes of the cutting tool to minimum, and it is possible to perform economical and efficient surface repair.

In the following description, "j" and "p" each refer to the number of a measurement point a at a certain measurement position x, and "i" denotes the number of a measurement position x.

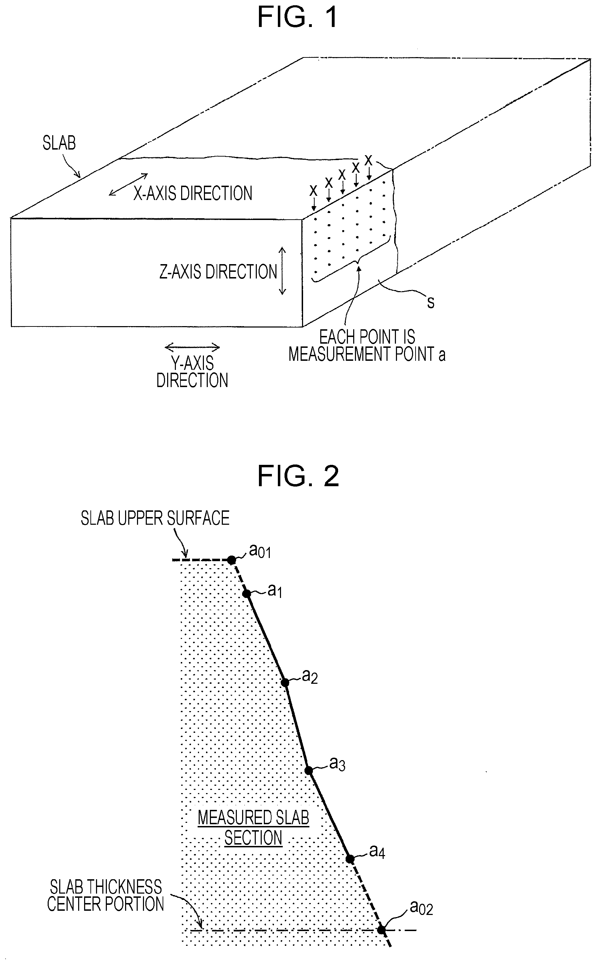

In a more specific embodiment of the present invention, the position x is a measurement position where the shape of a slab side surface s is measured by using a distance-measuring device. Fig. 1 illustrates a slab side surface s that is to be cut (repaired), a plurality of measurement positions x in the X-axis direction for measuring the shape of the slab side surface s, and a plurality of measurement points a in the Z-axis direction at each measurement position x. With a slab surface repairing method according to a more specific embodiment of the present invention, shape measurement of the slab side surface s is performed by measuring the coordinates of a plurality of measurement points a of the slab side surface s by using a distance-measuring device such as a laser distance-measuring device, and, based on the shape measurement result, the slab side surface s is cut (repaired) by controlling the path of the cutting tool in the X-axis direction and the Y-axis direction. Here, in performing shape measurement of the slab side surface s, at each of measurement positions x that are set at predetermined intervals in the X-axis direction, a plurality of measurement points a at predetermined intervals in the Z-axis direction are set beforehand, and a minimum cut amount AEmin, which is a cut amount that is minimally necessary for surface repair, is set regarding a cut amount at each of the measurement points a. Then, at each measurement position x, Y-axis coordinates of the plurality of measurement points a, which are set at predetermined intervals in the Z-axis direction, are obtained by measurement using a distance-measuring device. A cutting tool cut-in position in the Y-axis direction such that a cut amount $AE_i$ at each measurement point a is greater than or equal to a minimum cut amount AEmin and a cut-off sectional area $Ta_i$ in the Y-axis direction due to the cutting tool is minimum or close to minimum is determined based on the Y-axis coordinate of each measurement point a and a known Y-axis coordinate of the cutting tool, and cutting (surface repair) of the slab side surface s is performed by controlling a movement path of the cutting tool in the X-axis direction and the Y-axis direction so that the cutting tool is located at the cutting tool cut-in position at each measurement position x. Also in this case, most preferably, the cutting tool cut-in position in the Y-axis direction determined at each measurement position x is a cutting tool cut-in position such that the cut-off sectional area $Ta_i$ in the Y-axis direction due to the cutting tool is minimum. However, if it is not possible to do so for some reason, the cutting tool cut-in position may be a position such that the cut-off sectional area $Ta_i$ is close to minimum as described above.

In this case, preferably, at each measurement position x, the cutting tool cut-in position in the Y-axis direction is determined through the following steps (i) to (iii), and the movement path of the cutting tool in the X-axis direction and the Y-axis direction is controlled so that the cutting tool is located at the cutting tool cut-in position at each measurement position x.

(i) The Y-axis coordinates of the plurality of measurement points a that are set at predetermined intervals in the Z-axis direction are obtained by measurement using the distance-measuring device.
(ii) A cut amount $AE_{ip}$ at each of other measurement points $a_p$ when a cut amount $AE_{ij}$ at an arbitrary measurement point $a_j$ is assumed to be a predetermined minimum cut amount AEmin is obtained based on the Y-axis coordinate of each measurement point a obtained in (i) and the known Y-axis coordinate of the cutting tool, and, in a case where each cut amount $AE_{ip}$ is greater than or equal to the predetermined minimum cut amount AEmin, the cut-off sectional area $Ta_i$ in the Y-axis direction due to the cutting tool is obtained based on the cut amount $AE_{ij}$ at the measurement point $a_j$ and the cut amount $AE_{ip}$ at each of the other measurement points $a_p$.
(iii) The cut-off sectional area $Ta_i$ in each case is obtained by performing calculation in (ii) regarding all of the measurement points a, and a cutting tool cut-in position in a case where the cut-off sectional area $Ta_i$ is minimum or close to minimum (preferably minimum) is determined as a cutting tool cut-in position at the measurement position x.

In the slab surface repairing method according to the present invention, a slab side surface region that is cut with one-stroke movement of the cutting tool is not particularly limited. However, with the slab surface repairing method according to the present invention, it is possible to cut a slab side surface region between a position of a slab upper surface and a slab thickness center portion or a position near a lower part thereof in the Z-axis direction (that is, a slab side surface region corresponding to a half or slightly more than a half of the slab thickness) with one-stroke movement of the cutting tool. Such an embodiment is preferable from the viewpoint of reduction of the number of strokes in the cutting process and increasing the productivity.

Here, as described above, in the case of cutting a slab side surface region between each position of a slab upper surface and the slab thickness center portion or a position near a lower part thereof in the Z-axis direction with one-stroke movement of the cutting tool, preferably, the measurement points a are set as follows at each measurement position x. As described below, typically, irregularity in slab side surface shape in the Z-axis direction is the largest at the slab upper surface position. However, in a case of measuring a plurality of measurement points a, which are separated by predetermined intervals in the Z-axis direction, by using a distance-measuring device such as a laser distance-measuring device, it is technically difficult to use the slab upper surface position as a measurement point (actual measurement point). Moreover, in general, a slab is fixed by clamping both side surfaces with a fixing jig in a state of being supported by a bed, and, in this case, the slab fixing jig is present near the slab thickness center and interferes with a measuring instrument, and therefore it is also difficult to use the slab thickness center portion position as a measurement point (actual measurement point). Therefore, preferably, among the plurality of measurement points a that are set at predetermined intervals in the Z-axis direction, the uppermost measurement point $a_{01}$ that is located at or near the slab upper surface and the lowermost measurement point $a_{02}$ that is located at or near the slab thickness center portion are used as imaginary measurement points for calculation, and the other measurement points $a_1$ to $a_n$ are used as actual measurement points. Fig. 2 illustrates a plurality of measurement points a at predetermined intervals in the Z-axis direction at a certain measurement position x (the figure showing a slab section in the Y-axis direction) in an embodiment of the present invention. In this embodiment, among the plurality of measurement points a, measurement points $a_1$ to $a_4$ are measurement points that are actually measured by the distance-measuring device, the uppermost measurement point $a_{01}$ is an imaginary measurement point for calculation located at or near the slab upper surface in the Z-axis direction, and the lowermost measurement point $a_{02}$ is an imaginary measurement point for calculation located at or near the slab thickness center portion in the Z-axis direction.

Preferably, the Y-axis coordinates of these imaginary measurement points $a_{01}$ and $a_{02}$ are set as follows: the Y-axis coordinate of the uppermost measurement point $a_{01}$ is set on an extension line of a straight line that connects the uppermost measurement point $a_1$ and the second uppermost measurement point $a_2$, among the measurement points $a_1$ to $a_4$ (= measurement points $a_n$) that are actually measured; and the Y-axis coordinate of the lowermost measurement point $a_{02}$ is set on an extension line of a straight line that connects the lowermost measurement point $a_4$ (= measurement points $a_n$) and the second lowermost measurement point $a_3$ (measurement point $a_{n-1}$), among the measurement points $a_1$ to $a_4$ (= measurement points $a_n$) that are actually measured.

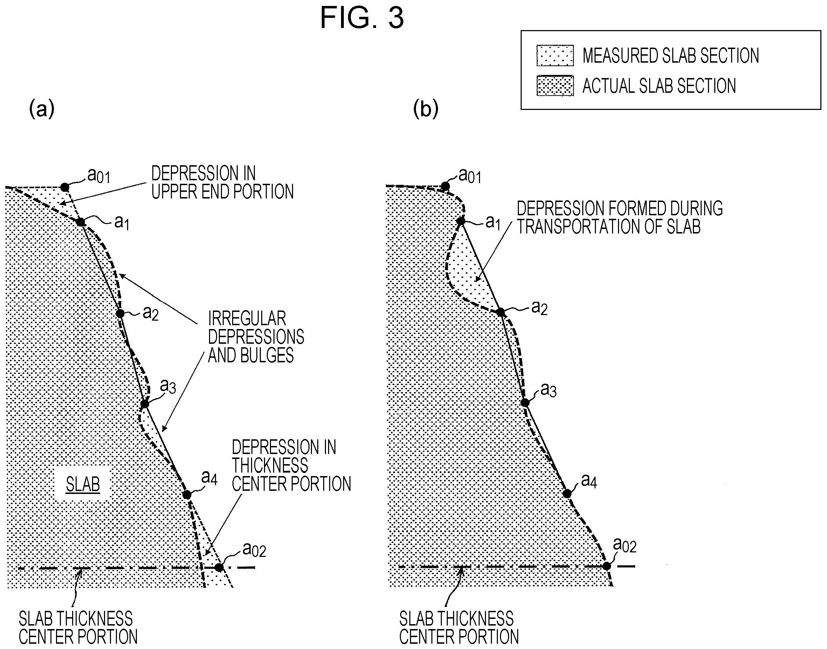

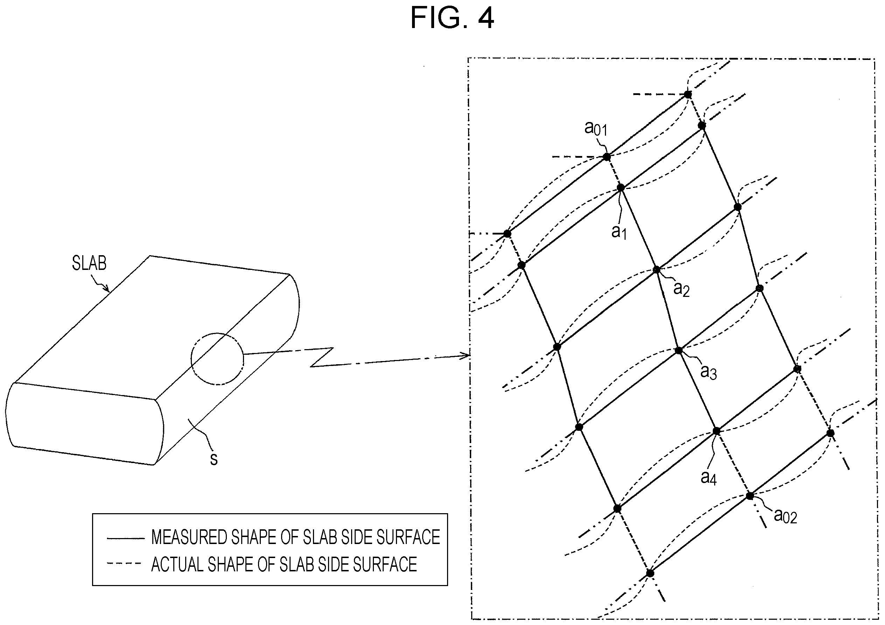

Figs. 3 and 4 each schematically illustrate irregularity in shape of a slab side surface. Figs. 3(a) and 3(b) each schematically illustrate irregularity in shape in the Z-axis direction at a certain measurement position x (the figure showing a slab section in the Y-axis direction). From these figures, it can be seen that depressions and bulges are present between the measurement point a and, with respect to a slab side surface shape defined by the actual measurement points $a_1$ to $a_4$ and the imaginary measurement points $a_{01}$ and $a_{02}$, the actual slab side surface shape (slab side surface actual shape) has considerable irregularity in the Z-axis direction. Fig. 4 schematically illustrates irregularity in shape of a slab side surface in the X-axis direction. It can be seen that irregularity like undulations are present between the measurement points a also in the X-axis direction and, with respect to a slab side surface shape defined by a plurality of measurement points a at each measurement position x in the X-axis direction, the actual slab side surface shape (slab side surface actual shape) has considerable irregularity also in the X-axis direction. As described above, the side surface s of an actual slab has depressions, bulges, undulations, deformations due to vibration during casting, and the like, and there is no guarantee of how is the shape for a part that is not measured. In consideration of these irregularity factors in shape, it has been found that it is possible to absorb irregularity in shape and to eliminate uncut part by additionally performing a certain degree of excess cut-in in accordance with a position (measurement point a) in the Z-axis direction. In the present invention, the "certain degree of excess cut-in" for eliminating uncut part is set as a minimum cut amount AEmin in accordance with a position (measurement point a) in the Z-axis direction.

That is, the minimum cut amount AEmin at each measurement point a is a cut amount that is minimally necessary to prevent generation of an uncut part in surface repair of the slab side surface s and is a cut amount that is set based on an empirical rule or/and a preliminary research.

If the minimum cut amount AEmin is too large, cutting load is unnecessarily large, and, if AEmin is too small, an uncut part is generated. Therefore, as described above, a minimum cut amount such that an uncut part is not generated is set based on an empirical rule (experiences in past operations) or/and a preliminary research.

The minimum cut amount AEmin is set for each of the measurement points a that are set at predetermined intervals in the Z-axis direction. Empirically, it has been found that a slab upper end portion (slab upper surface position) is likely to have a shape with a depressed corner due to cooling after casting and tends to have a larger irregularity (larger depressions) in surface shape than other places. Therefore, preferably, among the plurality of measurement points a that are set at predetermined intervals in the Z-axis direction, the minimum cut amount AEmin of the uppermost measurement point a located at or near the slab upper surface (imaginary measurement point $a_{01}$ for calculation in the example described above) is larger than the minimum cut amount AEmin of any other measurement points a.

There may be a case where the minimum cut amounts of all of the plurality of measurement points a other than the measurement point a located at or near the slab upper surface are set to the same value, or there may be a case where some or all of the minimum cut amounts are set to different values. Although the minimum cut amounts AEmin at the plurality of measurement points a that are set at predetermined intervals in the Z-axis direction are usually set to the same value at each measurement position x in the X-axis direction, there may be a case where the minimum cut amounts are set to different values.

In the present invention, the distance between measurement points a that are adjacent to each other in the Z-axis direction at each measurement position x, the number of measurement points a at each measurement position x, the distance between measurement positions x that are adjacent to each other in the X-axis direction, and the like are not particularly limited. However, from the viewpoint of accuracy in measurement of a slab side surface shape, the distance between the measurement points a that are adjacent to each other in the Z-axis direction is preferably 50 mm or less, more preferably 30 mm or less, and further preferably, 15 mm or less. From a similar viewpoint, the distance between the measurement positions x that are adjacent to each other in the X-axis direction is preferably 100 mm or less, more preferably 50 mm or less, and further preferably 30 mm or less. Moreover, although it may depend on the slab thickness, from a similar viewpoint, the number of measurement points a at each measurement position x is three or more, more preferably five or more, and further preferably eight or more.

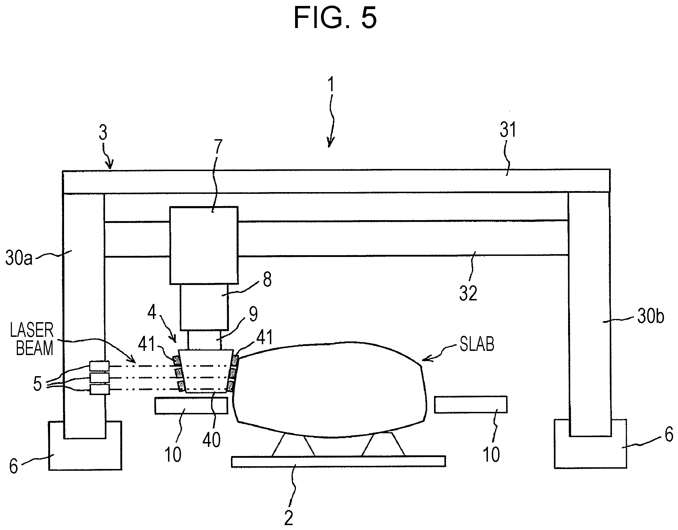

Fig. 5 illustrates an embodiment of a slab surface repairing apparatus that is used in the present invention and a situation in which a slab surface is being repaired by using the apparatus.

The slab surface repairing apparatus 1 includes a bed 2 for supporting a slab having a surface to be repaired and a portal frame 3 that is movable in such a way as to straddle the bed 2. A cutting tool 4 and distance-measuring devices 5 are held by the portal frame 3.

The portal frame 3 includes left and right support columns 30a and 30b (leg portions) and an upper frame 31 that couples these. Between the two support columns 30a and 30b, a guide rail 32 (cross rail) for moving a cutting tool is disposed.

Rails 6 for moving the portal frame are provided on both sides of the bed 2 in the longitudinal direction of the bed 2. Because the two support columns 30a and 30b of the portal frame 3 slide relative to the rails 6, the portal frame 3 is horizontally movable in the longitudinal direction of the bed 2.

A front head 7 is movably provided on the guide rail 32, and the cutting tool 4 is held by the front head 7 via a main shaft 8 and a rotation shaft 9. That is, the main shaft 8, which can extend and contract (move upward and downward), is attached to a lower part of the front head 7, the rotation shaft 9 is provided on a lower part of the main shaft 8, and the cutting tool 4 having a substantially cylindrical shape is fixed to the rotation shaft 9.

A plurality of distance-measuring devices 5 each of a fixed type, for measuring the surface shape of a slab side surface, are provided on the support column 30a of the portal frame 3. The distance-measuring devices 5 are provided at intervals in the up-down direction so as to respectively face a plurality of measurement points a (actual measurement points) of the slab side surface s in the Z-axis direction. Alternatively, a distance-measuring device 5 that is movable in the up-down direction may be provided.

The type of the distance-measuring device 5 used is not particularly limited. For example, a laser type, an optical type, an ultrasonic type, and the like can be used. Because a laser distance-measuring device (laser displacement gauge) is preferable among these, hereafter, a case where the laser distance-measuring device is used will be described.

In the figure, "10" represents a deck onto which an operator can enter before and after a surface repair operation.

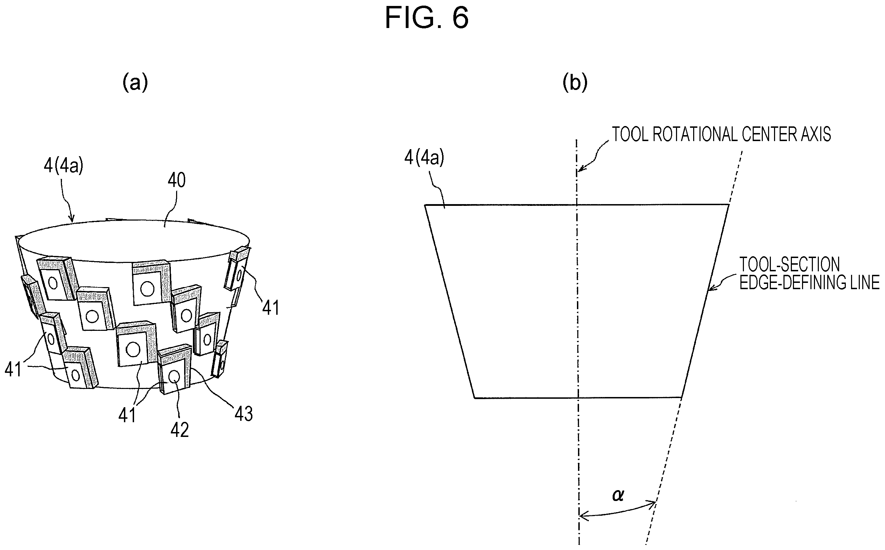

Fig. 6(a) is a perspective view and Fig. 6(b) is a longitudinal sectional view illustrating the cutting tool 4 of the slab surface repairing apparatus 1 of Fig. 5. Fig. 6 illustrates only an effective cutting length portion 4a of the cutting tool 4 (a tool portion that includes a cutting edge and that actually performs cutting).

The cutting tool 4 includes a cutting edge 41 in an outer peripheral part of a substantially cylindrical body 40 that constitutes the effective cutting length portion 4a. The cutting tool 4 is fixed to the rotation shaft 9, and thus rotates with a substantially cylindrical shaft as the center (rotational center axis). The shape of the effective cutting length portion 4a (the substantially cylindrical body 40) is not particularly limited, and may be any appropriate shape such as a cylindrical shape, a conical frustum shape, an inverted conical frustum shape. However, judging from the shape of a typical slab side surface, the shape of the effective cutting length portion 4a is preferably a cylindrical shape or an inverted conical frustum shape. Therefore, the effective cutting length portion 4a (the substantially cylindrical body 40) of the present embodiment has an inverted conical frustum shape.

Hereafter, for convenience of description, an edge line of the effective cutting length portion 4a in a longitudinal section will be referred to as a "tool-section edge-defining line".

The side surface taper angle $\alpha$ (angle between the tool-section edge-defining line and the tool rotation central axis) of the effective cutting length portion 4a (the substantially cylindrical body 40) having an inverted conical frustum shape may be set in any appropriately manner in consideration of irregularity in shape of the slab side surface s. However, in general, the side surface taper angle $\alpha$ is preferably in the range of about 0 to 15°, more preferably in the range of about 1.0 to 8.0°, and further preferably in the range of about 1.5 to 4.0°.

In the figure, "42" represents a fixing means (such as a screw) for fixing the cutting edge 41, and "43" represents a back support for the cutting edge 41.

With the slab surface repairing apparatus 1, in a state in which a slab S having a surface to be repaired is placed on the bed 2 horizontally, in a case where the longitudinal direction of the slab side surface s to be cut is defined as the X-axis direction, a horizontal direction perpendicular to the X-axis direction is defined as the Y-axis direction, and the height direction of the slab side surface s is defined as the Z-axis direction, the cutting tool 4 can move in the X-axis direction as the portal frame 3 moves along the rails 6 in the longitudinal direction of the bed 2, the cutting tool 4 can move in the Y-axis direction as the front head 7 moves along the guide rails 32 in the width direction of the bed 2, and the cutting tool 4 can move in the Z-axis direction as the main shaft 8 extends and contracts (moves) in the up-down direction.

In a case of cutting the slab side surface s, first, by moving the portal frame 3 while emitting length-measuring laser beams from a plurality of laser distance-measuring devices 5 that are provided at intervals in the up-down direction, measurement is performed regarding a plurality of measurement points a (distance measurement) in the X-axis and Z-axis directions, and thus the shape of the slab side surface s is measured. In a case where the laser distance-measuring device 5 is not of a fixed type but of a movable type, by moving the portal frame 3 and moving the laser distance-measuring device 5 in the up-down direction, measurement is performed regarding a plurality of measurement points a (distance measurement) in the X-axis and Z-axis directions, and thus the shape of the slab side surface s is measured. Subsequently, by moving the cutting tool 4 in the X-axis and Z-axis directions while rotating the cutting tool 4, cutting (surface repair) of the slab side surface s is performed. At this time, the movement path of the cutting tool in the X-axis direction and the Y-axis direction is controlled based on the result of measuring the surface shape.

Hereafter, by using as an example a case where the slab surface repairing apparatus 1 shown in Figs. 5 and 6 is used, a slab surface repairing method according to an embodiment of the present invention will be described.

In this embodiment, a slab side surface region between a position of a slab upper surface and a position near a lower part of a slab thickness center portion in the Z-axis direction (that is, a slab side surface region corresponding to a slightly half or more of the slab thickness) is cut with one-stroke movement of the cutting tool.

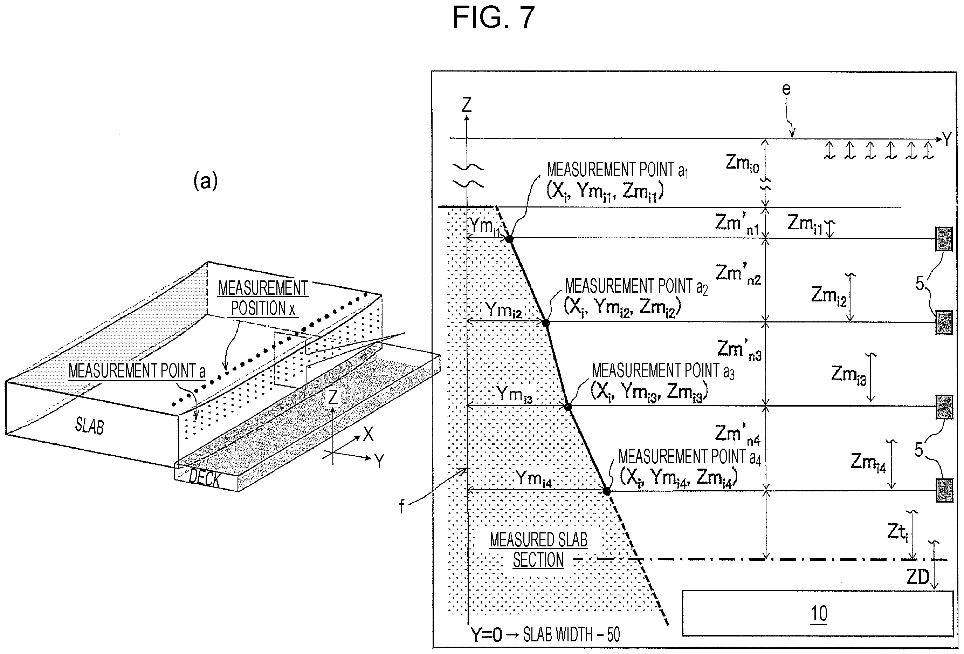

Fig. 7 illustrates a model for measuring the shape a slab side surface s to be cut. Fig. 7 illustrates the following situation: a coordinate system such that the longitudinal direction of the slab side surface s is the X-axis direction, a horizontal direction perpendicular to the X-axis direction is the Y-axis direction, and the height direction of the slab side surface s (thickness direction) is the Z-axis direction is assumed, at each of measurement positions x that are determined at predetermined intervals in the X-axis direction (X-axis direction measurement pitch), measurement using the laser distance-measuring device 5 (distance measurement in the Y-axis direction) is performed regarding a plurality of measurement points a at predetermined intervals in the Z-axis direction, and the shape of the slab side surface s is measured based on the measurement result. Fig. 7(a) illustrates the measurement positions x and the measurement points a of the slab side surface s, and Fig. 7(b) illustrates a measurement model at a Y-axis direction slab section at an i-th measurement position x on the X-axis direction measurement pitch. Symbols in Fig. 7(b) are defined as follows. Note that, in the figure, "e" represents a coordinate reference point (line) in the Z-axis direction, and "f" represents a coordinate reference point (line) in the Y-axis direction.

$X_i$: X-axis coordinate value of the measurement position x

$Zm_{i0}$: slab upper surface height position (obtained beforehand by measuring the upper surface shape)

$Zm'_{i1}$: Z-axis coordinate value of measurement start height position (any appropriate value is assigned)

$Zm'_{n2}$ to $Zm'_{n4}$: distances between measurement points a (any appropriate values are assigned)

$Zm'_{n1}$: distance between slab upper surface and measurement point $a_1$ (any appropriate value is assigned)

$Zm_{i1}$ to $Zm_{i4}$: Z-axis coordinate values of measurement points a at the measurement position x (= position of each laser distance-measuring device)

$ZD$: upper surface position of deck (determined based on dimensions and structure of equipment)

$Ym_{i1}$ to $Ym_{i4}$: Y-axis coordinate values of measurement point a at the measurement position x

$Zt_i$: $Zm_{i0}$ + (slab thickness)/2

Here, the measured shape of the slab side surface s is a shape that is defined as follows: at each measurement position x, measurement using the laser distance-measuring device 5 (distance measurement in the Y-axis direction) is performed regarding each of the measurement points a at predetermined intervals in the Z-axis direction, and the shape is defined by the coordinate values ($X_i$, $Ym_{ij}$, $Zm_{ij}$) of the measurement points a obtained based on the measurement values.

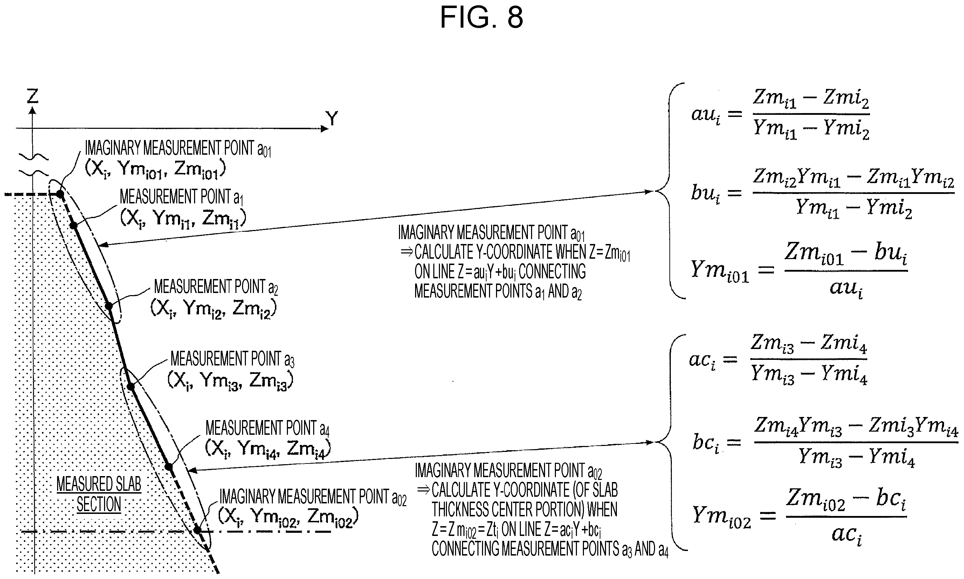

As described above in the description of Fig. 2, in the case of measuring a plurality of measurement points a at predetermined intervals in the Z-axis direction by using the laser distance-measuring device 5, it is technologically difficult to use the slab upper surface position as a measurement point (actual measurement point). Moreover, because a slab fixing jig is present near the slab thickness center and interferes with a measuring instrument, it is also difficult to use the slab thickness center portion position as a measurement point (actual measurement point). In the present embodiment, a slab side surface region between a position of a slab upper surface and a position near a lower part of a slab thickness center portion in the Z-axis direction is cut with one-stroke movement of the cutting tool. Therefore, among a plurality of measurement points a that are set at predetermined intervals in the Z-axis direction, the uppermost measurement point $a_{01}$ that is located at or near the slab upper surface and the lowermost measurement point $a_{02}$ that is located at or near the slab thickness center portion are used as imaginary measurement points for calculation, and the other measurement points $a_1$ to $a_4$ are used as actual measurement points. The Y-axis coordinates of the imaginary measurement points $a_{01}$ and $a_{02}$ are set as follows. That is, the Y-axis coordinate of the uppermost measurement point $a_{01}$ at the slab upper surface position is set on an extension line of a straight line that connects the uppermost measurement point $a_1$ and the second uppermost measurement point $a_2$, among the actual measurement points $a_1$ to $a_4$. The Y-axis coordinate of the lowermost measurement point $a_{02}$ at the slab thickness central part position is set on an extension line of a straight line that connects the lowermost measurement point $a_4$ and the second lower most measurement point $a_3$, among the actual measurement points $a_1$ to $a_4$. Fig. 8 illustrates the definitions of coordinates of these imaginary measurement points and an example of a method of calculating the coordinates.

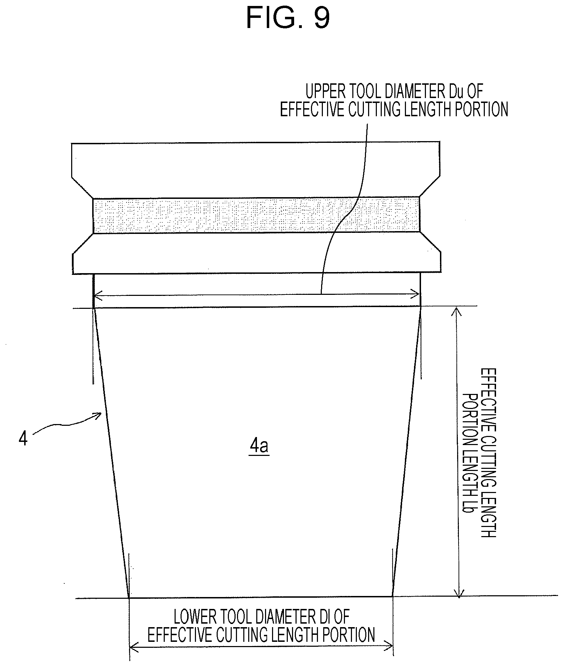

Fig. 9 illustrate the defining parameters of a cutting tool shape. The relationship among an upper tool diameter Du, a lower tool diameter Dl, an effective cutting length portion length Lb is defined by the side surface taper angle $\alpha$ of the effective cutting length portion 4a (the substantially cylindrical body 40) described above. However, the other parameters may be set to any appropriate values.

As the basic concept of a tool movement path, a measurement point group is considered as a two-dimensional array that includes imaginary measurement points of the uppermost part and the lowermost part and that is distributed two-dimensionally (in the X-axis and Z-axis directions), that is, data (three-dimensional coordinate values) of the j-th measurement point a in the Z direction at the i-th measurement position x in the X-axis direction is considered as three two-dimensional arrays $X_i(i, j)$, $Ym_{ij}(i, j)$, and $Zm_{ij}(i, j)$, and the positional relationship between the slab shape at each section and the cutting tool 4 (effective cutting length portion section) is determined.

The position of the cutting tool 4 at each measurement position x is determined in the order from the Z-axis direction position to the Y-axis direction position based on constraints described below.

Constraints on the Z-axis direction position of the cutting tool 4 are the following (1) to (3), and the degree of priority of these items is (1) = (2) > (3).

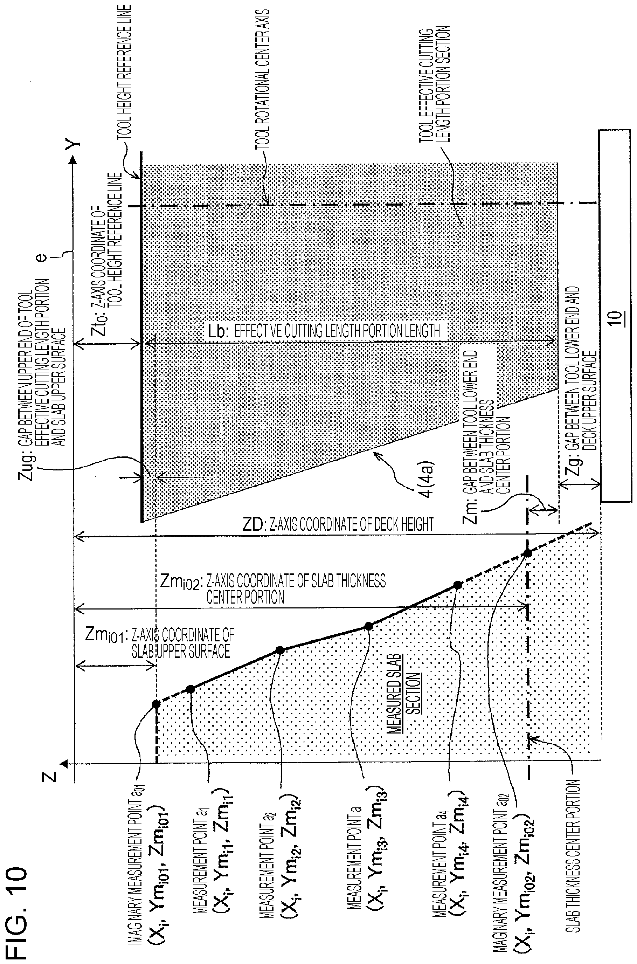

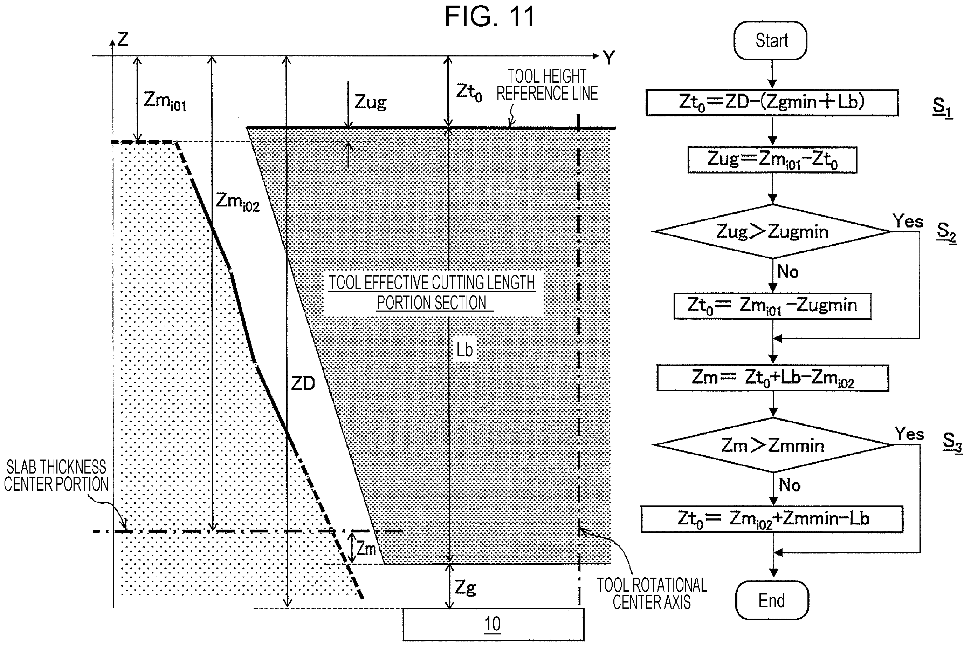

(1) In order to prevent the cutting tool 4 from contacting the deck 10, the distance from a position on the deck 10 to the lower end of the cutting tool 4 is "the minimum gap amount" or more (that is, Zg > Zgmin in Figs. 10 and 11 described below).

(2) In order to prevent a part of the cutting tool 4 other than the effective cutting length portion 4a (a tool part without a cutting edge) from performing cutting, the upper end of the effective cutting length portion 4a of the cutting tool 4 is located above the slab upper surface (that is, Zug > Zugmin in Figs. 10 and 11 described below).

(3) After cutting a slab side surface region between a position of a slab upper surface and a position near a lower part of a slab thickness center portion in the Z-axis direction (that is, a slab side surface region corresponding to a slightly half or more of the slab thickness) with one-stroke movement of the cutting tool 4, the slab is turned upside down, and a similar slab side surface region (a slab side surface region corresponding to a slightly half or more of the slab thickness) is cut with one-stroke movement of the cutting tool 4. Therefore, a margin that enables the slab thickness center portion to be cut in an overlapping manner is necessary, and thus the lower end of the effective cutting length portion 4a of the cutting tool 4 is below the slab thickness center portion by the margin (that is, Zm > Zmmin in Figs. 10 and 11 described below).

Next, constraints on the Y-axis direction position (= cut-in) of the cutting tool 4 (the effective cutting length portion 4a) are the following (i) and (ii), and the degree of priority of these constraints is (i) > (ii).

(i) At any measurement point a in the Z-axis direction, the cut-in is greater than or equal to the "minimum cut amount" that is set beforehand for each measurement point a.

(ii) Provided that (i) is satisfied, the cut-off sectional area is minimum.

The constraints are defined beforehand as processing parameters, at each measurement position x, a tool position that satisfies these parameters is calculated, and the tool position is converted into a tool movement path program that realizes the position.

First, how the Z-axis direction position (height position) of the cutting tool 4 is determined will be described.

Fig. 10 illustrates an overview of tool height position parameters for determining the Z-axis coordinate $Zt_0$ of a tool height reference line (upper end of the effective cutting length portion 4a), which is the reference of the height position of the cutting tool 4 (the figure showing a slab section in the Y-axis direction and an effective cutting length portion section of the tool). Fig. 11 illustrates an algorithm for determining a tool height position based on the constraints (1) to (3) (the figure showing a slab section in the Y-axis direction and an effective cutting length portion section of the tool).

Before starting processing, the following three parameters, which are constraint conditions, are set beforehand as cutting parameters.

Zgmin: lower limit of the gap between the lower end of the cutting tool 4 and the upper surface of the deck 10 = condition for preventing the cutting tool 4 and the deck 10 from contacting each other

Zugmin: lower limit of the gap between the upper end of the effective cutting length portion 4a of the cutting tool 4 and the slab upper surface = condition for preventing a part other than the effective cutting length portion 4a of the cutting tool 4 (a tool part without a cutting edge) from performing cutting

Zmmin: target gap between the slab thickness center portion and the lower end of the effective cutting length portion 4a of the cutting tool 4 = condition for preventing generation of an uncut part near the slab thickness center portion

After setting, as a temporary candidate, a height (S1 in Fig. 11) such that the lower end of the cutting tool 4 and the upper surface of the deck 10 do not contact each other, the distance between the upper end of the effective cutting length portion 4a of the cutting tool 4 and the slab upper surface is calculated, and the position whether or not a tool part other than the effective cutting length portion 4a (a tool part without a cutting edge) performs cutting is examined (S2 in Fig. 11). Subsequently, the height difference between the lower end of the effective cutting length portion 4a and the slab thickness center portion is calculated, and whether or not the cut amount in a part below the slab thickness center portion is excessive is examined (S3 in Fig. 11).

Due to the calculation described above, the tool height position is determined.

With the tool height position determined as described above as a precondition, the Y-axis direction position of the cutting tool 4, that is, the cutting tool cut-in position (cut-in amount) is determined, and the movement path of the cutting tool 4 is controlled based on this. To be specific, the cutting tool cut-in position (cut-in amount) is determined and the movement path of the cutting tool is controlled so that, at each measurement position x, cut amounts at a plurality of positions in the Z-axis direction are each greater than or equal to the minimum cut amount and the cut-off sectional area in the Y-axis direction due to the cutting tool is minimum.

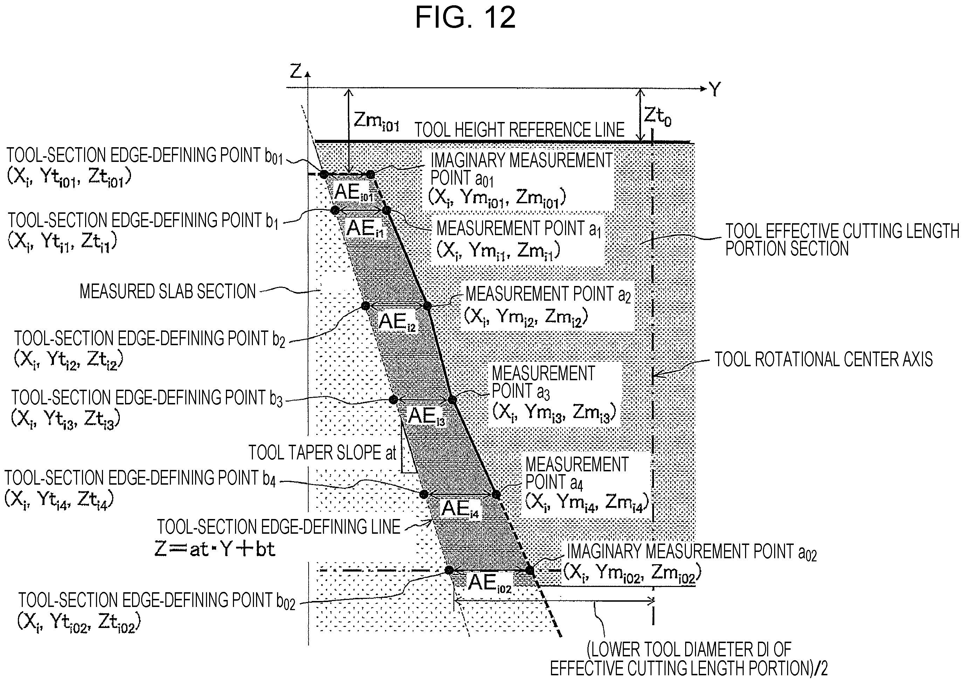

Fig. 12 illustrates a model of a situation when the cutting tool 4 is cut into a Y-axis direction slab section at a certain measurement position x. At this time, the Y-axis distance between the tool-section edge-defining line (tool-section edge-defining points $b_{01}$, $b_1$ to $b_4$, and $b_{02}$) of the effective cutting length portion 4a and each measurement point a (measurement points $a_{01}$, $a_1$ to $a_4$, and $a_{02}$) is considered as the cut amount $AE_{ij}$ at each measurement point a. Note that the Y-axis coordinates of the tool-section edge-defining points $b_{01}$, $b_1$ to $b_4$, $b_{02}$ are known coordinates.

Regarding the cut amount at each measurement point a, the minimum cut amount AEmin, which is a cut amount that is minimally necessary for surface repair, is set as a processing parameter. In this case, usually, the minimum cut amount AEumin at the uppermost measurement point $a_{01}$ and the minimum cut amount AEmmin at the other measurement points $a_2$ to $a_4$ and $a_{02}$ (measurement points a other than that at the uppermost part) are set so that AEumin > AEmmin. Then, a cutting tool cut-in position in the Y-axis direction such that the cut amount $AE_i$ at each measurement point a is greater than or equal to a minimum cut amount AEmin and the cut-off sectional area $Ta_i$ in the Y-axis direction by the cutting tool 4 is minimum is determined.

To be specific, the cutting tool cut-in position (cut-in amount) is determined as follows.

Because the measurement points $a_{01}$, $a_1$ to $a_4$, and $a_{02}$ and the tool-section edge-defining points $b_{01}$, $b_1$ to $b_4$, and $b_{02}$ have the same height, the following expression (1) holds.

[Math. 1]

$$Zt_{ij} = Zm_{ij} \quad \cdots \qquad \cdots (1)$$

The expressions (2) and (3) are calculation formulas for calculating the tool position parameter bt and the cut amount $AE_{ip}$ (p # j) at the other measurement points a, when the cut amount $AE_{ij}$ at the j-th measurement point a in the Z-axis direction is assumed. In the expression, "at" represents the tool taper slope based on the side surface taper angle $\alpha$ of the effective cutting length portion 4a of the cutting tool 4.

[Math. 2]

$$bt = Zm_{ij} - at \cdot (Ym_{ij} - AE_{ij}) \qquad \cdots (2)$$

$$AE_{ip} = Zm_{ip} - \frac{Ym_{ip} - bt}{at} \qquad \cdots (3)$$

The expression (4) below is a calculation formula for calculating the cut-off sectional area $Ta_i$ when N = the number of measurement points (excluding imaginary measurement points in the uppermost part and the lowermost part) + 1.

[Math. 3]

$$Ta_i = \sum_{j=0}^{N} \frac{1}{2} (Zm_{ij} - Zm_{ij+1})(AE_{ij} + AE_{ij+1}) \qquad \cdots (4)$$

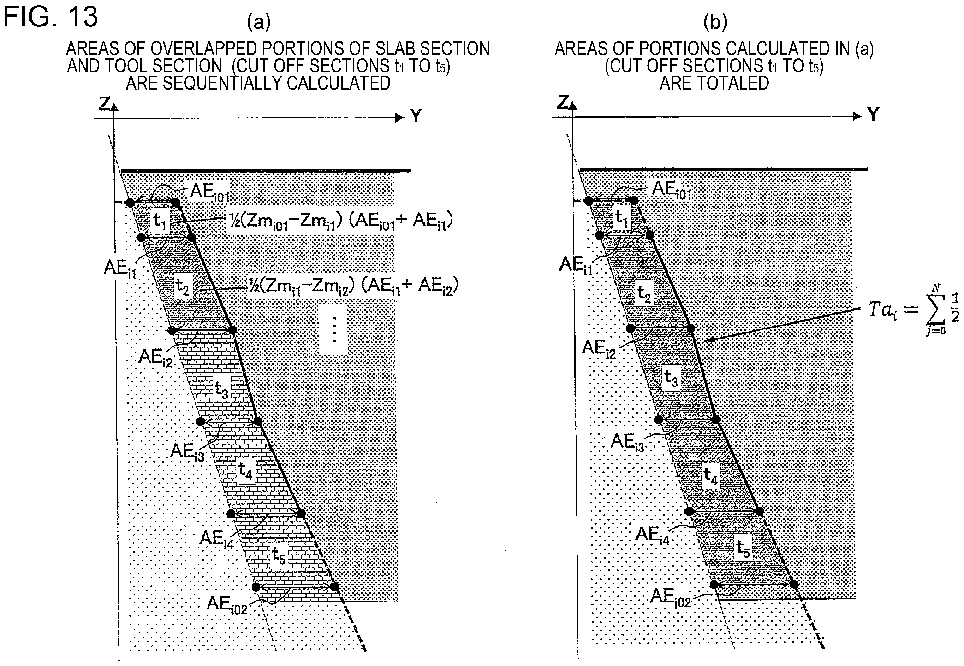

Fig. 13 illustrates an example of calculation of (a method of calculating) the cut-off sectional area $Ta_i$ when N = 5. By calculating the areas of five cut-off sections $t_1$ to $t_5$ and totaling the areas (Fig. 13(a)), the cut-off sectional area $Ta_i$ is obtained (Fig. 13(b)).

In the present invention, when the cut amount $AE_{ij}$ at an arbitrary measurement point $a_j$ is assumed to be a predetermined minimum cut amount AEmin, the cut amount $AE_{ip}$ at each of other measurement points $a_p$ is obtained, and, in a case where each cut amount $AE_{ip}$ is greater than or equal to the predetermined minimum cut amount AEmin, the cut-off sectional area $Ta_i$ in the Y-axis direction due to the cutting tool 4 is obtained based on the cut amount $AE_{ij}$ at the measurement point $a_j$ and the cut amount $AE_{ip}$ at each of the other measurement points $a_p$.

Here, in the calculation described above, the cut-off sectional area $Ta_i$ is obtained only in a case where the cut amount $AE_{ip}$ at the other each measurement points $a_p$ is greater than or equal to the predetermined minimum cut amount AEmin, because, if the cut amount $AE_{ip}$ is less than the predetermined minimum cut amount AEmin, there is a risk that the aforementioned "uncut part" is generated.

Hereafter, description will be given by using a specific example. In the example shown in Fig. 13, for example, in a case where the minimum cut amount AEumin is set regarding the uppermost measurement point $a_{01}$ and the minimum cut amount AEmmin is set regarding the other measurement points $a_1$ to $a_4$ and $a_{02}$, the following calculations (A) to (C) are performed by using the expressions (2), (3), and (4).

(A) The cut amounts $AE_{i1}$ to $AE_{i4}$ and $AE_{i02}$ at each of other measurement points $a_1$ to $a_4$ and $a_{02}$ when it is assumed that the cut amount $AE_{i01}$ at the measurement point $a_{01}$ = minimum cut amount AEumin are calculated by using the expressions (2) and (3). Next, these calculated cut amounts $AE_{i1}$ to $AE_{i4}$ and $AE_{i02}$ are compared with the minimum cut amount AEmmin set at each of the measurement points $a_1$ to $a_4$ and $a_{02}$, and, in a case where the calculated cut amounts are all greater than or equal to a minimum cut amount AEmmin, the cut-off sectional area $Ta_{i01}$ in the Y-axis direction is obtained by using the expression (4) based on the cut amounts $AE_{i01}$, $AE_{i1}$ to $AE_{i4}$, and $AE_{i02}$. In contrast, in a case where at least one of the calculated cut amounts $AE_{i1}$ to $AE_{i4}$ and $AE_{i02}$ is less than the minimum cut amount AEmmin, the cut-off sectional area $Ta_{i01}$ is not obtained, because there is a risk that an "uncut part" is generated as described above.

(B) Likewise, the cut amounts $AE_{i01}$, $AE_{i2}$ to $AE_{i4}$, and $AE_{i02}$ at each of other measurement points $a_{01}$, $a_2$ to $a_4$, and $a_{02}$ when it is assumed that the cut amount $AE_{i1}$ at the measurement point $a_1$ = the minimum cut amount AEmmin are calculated by using the expressions (2) and (3). Next, these calculated cut amount $AE_{i01}$, $AE_{i2}$ to $AE_{i4}$, and $AE_{i02}$ are compared with the minimum cut amount AEumin or AEmmin set at each of the measurement points $a_{01}$, $a_2$ to $a_4$, and $a_{02}$, and, in a case where the cut amount $AE_{i01}$ is greater than or equal to the minimum cut amount AEumin and the cut amounts $AE_{i2}$ to $AE_{i4}$ and $AE_{i02}$ are each greater than or equal to the minimum cut amount AEmmin, the cut-off sectional area $Ta_{i1}$ is obtained by using the expression (4) based on the cut amounts $AE_{i01}$, $AE_{i1}$ to $AE_{i4}$, and $AE_{i02}$. Also in this case, in a case where at least one of the calculated cut amounts $AE_{i01}$, $AE_{i2}$ to $AE_{i4}$, and $AE_{i02}$ is less than the minimum cut amount (minimum cut amount AEmmin or AEumin), the cut-off sectional area $Ta_{i1}$ is not obtained, because there is a risk that an "uncut part" is generated as described above.

(C) Also, regarding the measurement point $a_2$, the measurement point $a_3$, the measurement point $a_4$, and the measurement point $a_{02}$, the cut-off sectional areas $Ta_{i2}$ to $Ta_{i4}$ and $Ta_{i02}$ in the Y-axis direction are obtained in the same way as in (B).

Then, a cutting tool cut-in position in a case where the cut-off sectional area $Ta_i$ is the smallest of the cut-off sectional areas $Ta_i$ obtained in (A) to (C) is determined as the cutting tool cut-in position at the measurement position x. At each measurement position x in the X-axis direction, the cutting tool cut-in position is determined as described above, and the movement path of the cutting tool in the X-axis direction and the Y-axis direction is controlled so that the cutting tool is located at the cutting tool cut-in position at each measurement position x.

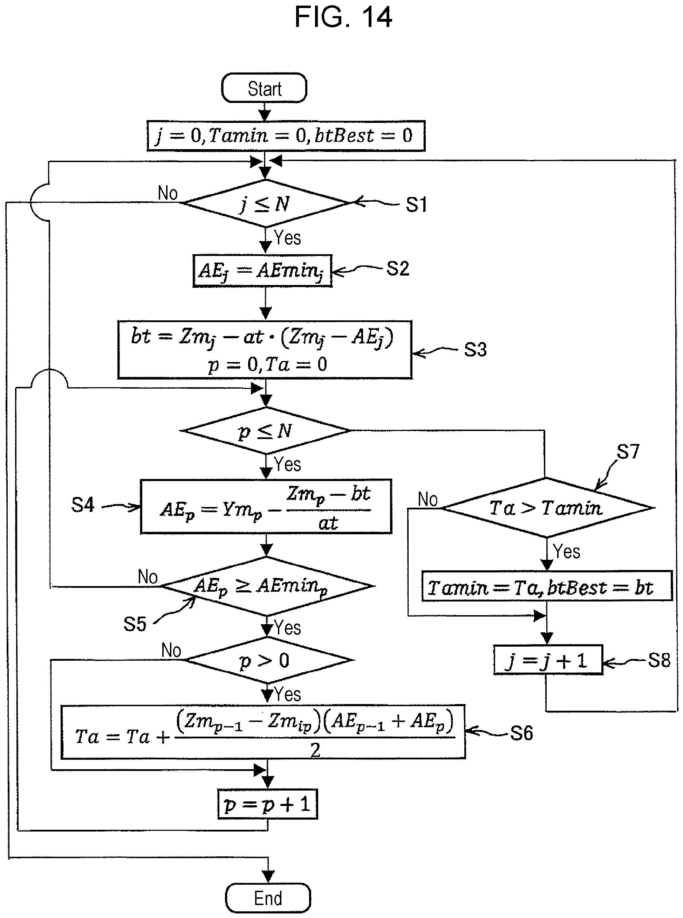

Fig. 14 is a flowchart of a method for determining the cut-in amount (tool position) of the cutting tool at a certain measurement position x. The symbols in the figure are defined as follows.

$Ym_j$, $Zm_j$: coordinates of a measurement point a
$Yt_j$, $Zt_j$: coordinates of a tool-section edge-defining point (see Fig. 12)
Ta: cut-off sectional area
$AE_j$: cut amount at each measurement point a
$AEmin_j$ (j = 1; $AEmin_j$ = AEumin, j # 1; $AEmin_j$ = AEmmin) : minimum cut amount
Tamin: minimum cut-off sectional area
bt: tool position parameter
btBest: best tool position determining parameter

As described above, in calculating the cut-in amount at a certain measurement position $x_i$, the cut amount $AE_{ip}$ at another measurement points $a_p$ when the cut amount $AE_{ij}$ at a certain measurement point $a_j$ is assumed to be the minimum cut amount AEmin is calculated, the cut-off sectional area Ta is calculated based on these cut amounts $AE_{ij}$ and $AE_{ip}$, and similar calculations are performed for all measurement points a. In doing so, determination is made as to whether or not the cut amount $AE_{ip}$ at another measurement point $a_p$ when it is assumed that the cut amount $AE_{ij}$ at a certain measurement point $a_j$ = the minimum cut amount AEmin is greater than or equal to a minimum cut amount $AEmin_j$ at the other measurement point $a_p$. If cut-in (the cut amount) is less than the minimum cut amount AEmin, cut amount calculation regarding the measurement point $a_p$ is interrupted, and the process proceeds to calculation for the next measurement point a.

The calculated cut-off areas Ta respectively calculated on the assumption that the cut amount $AE_j$ at each

measurement point a = minimum cut amount AEmin are compared with each other, and a tool position parameter bt at the time of the minimum cut-off area Tamin is determined as the best tool position determining parameter btBest.

The determination of cut-in amount (tool position) described above is performed through the following steps (S1) to (S8) in accordance with the flowchart of Fig. 14.

(S1): Whether j (the number of a measurement point $a_j$ at which the minimum cut amount is assumed in (S2) below) is greater than the total number of measurement points N + 1 is checked, and, if j is greater, calculation is finished.

(S2): The cut amount $AE_j$ at the j-th measurement point $a_j$ is assumed to be the minimum cut amount at the predetermined measurement point $a_j$.

(S3): The tool position parameter bt at this time is calculated, and the intra-section repeating variable p and the cut-off sectional area Ta are initialized (previously measured values are cancelled).

(S4): Based on the tool position parameter bt temporarily calculated in (S3), a cut amount $AE_p$ at each of other measurement points $a_p$ is calculated.

(S5): Whether the cut amount $AE_p$ calculated in (S4) is greater than the minimum cut amount at each predetermined measurement point $a_p$ is checked. If the cut amount AE at any measurement point $a_p$ is less than the minimum cut amount, calculation regarding the measurement point $a_p$ is interrupted, and the calculations from (S1) are performed regarding a measurement point a whose number j is the next largest.

(S6): Based on the calculated cut amount, the cut-off sectional areas between the measurement points a are calculated and totaled (see Fig. 13), and, finally, the cut-off sectional area Ta in a case where the cut amount $AE_j$ at the j-th measurement point $a_j$ is assumed to be the minimum cut amount at the predetermined measurement point $a_j$ is obtained.

(S7): The cut-off sectional area Ta obtained in (S6) is compared with the minimum cut-off sectional area Tamin that has been obtained so far, and, if Ta is less than Tamin, the value of Ta is set to be a new Tamin and bt is set to btBest.

(S8): Steps (S1) to (S7) are repeated regarding a measurement point a whose number j is the next largest, and the tool position is determined based on btBest that is finally obtained.

Calculations described above are performed for all measurement positions x, the tool position at each measurement position x is determined, a tool movement path program is made based on this, and the movement path of the cutting tool in the X-axis direction and the Y-axis direction is controlled in accordance with the program. The making of the tool movement path program and the control of the cutting tool movement path based on the program are performed by a computer that has functions for executing these.

As heretofore described, by controlling the cutting tool movement path, after cutting a slab side surface region between a position of a slab upper surface and a position near a lower part of a slab thickness center portion in the Z-axis direction (that is, a slab side surface region corresponding to a slightly half or more of the slab thickness) with one-stroke movement of the cutting tool 4, the slab on the bed 2 is turned upside down, and a similar slab side surface region (a slab side surface region corresponding to a slightly half or more of the slab thickness) is cut with one-stroke movement of the cutting tool 4.

The embodiment described above shows a case of cutting a side surface of a slab in the long-side direction of the slab. However, it is also possible to cut a side surface of a slab in the short-side direction (a front surface or a back surface) of the slab in a similar way.

With the slab repairing method according to the present invention, because a slab side surface can be repaired with a minimum cut amount (cut-in amount), it is possible to increase the cutting feed speed and to increase the production amount by reducing the processing cycle time.

Fig. 15 illustrates a comparison of slab surface repair time (processing time) between an existing slab surface repairing method, which uses a plain milling cutter and that requires a plurality of paths, and the slab surface repairing method according to the present invention. When the slab surface repair time of the existing slab surface repairing method is assumed to be 100, the slab surface repair time of the slab surface repairing method according to the present invention is 81, and the repair time can be greatly reduced.

Reference Signs List

| | |
|---|---|
| 1 | slab surface repairing apparatus |
| 2 | bed |
| 3 | portal frame |
| 4 | cutting tool |
| 4a | effective cutting length portion |
| 5 | laser distance-measuring device |
| 6 | rail |

| 7 | front head |
| 8 | main shaft |
| 9 | rotation shaft |
| 10 | deck |
| 30a, 30b | support column |
| 31 | upper frame |
| 32 | guide rail |
| 40 | substantially cylindrical body |
| 41 | cutting edge |
| 42 | fixing means |
| 43 | back support |
| x | measurement position |
| $a$, $a_1$ to $a_4$, $a_{01}$, $a_{02}$ | measurement point |
| s | slag side surface |

**Claims**

1. A method of repairing a surface of a slab,

    wherein, when cutting a slab side surface (s) of a slab that is placed on a bed by using a cutting tool that moves in a longitudinal direction thereof, the cutting tool including a cutting edge at a peripheral part of a substantially cylindrical body and rotating about a substantially cylindrical shaft,
    in a case where the longitudinal direction of the slab side surface (s) is defined as an X-axis direction, a horizontal direction perpendicular to the X-axis direction is defined as a Y-axis direction, and a height direction of the slab side surface (s) is defined as a Z-axis direction, at each of positions (x) that are set at predetermined intervals in the X-axis direction, a minimum cut amount, which is a cut amount that is minimally necessary for surface repair, is set beforehand regarding cut amounts at a plurality of positions on the slab side surface (s) in the Z-axis direction, and
    at each position (x), a cutting tool cut-in position in the Y-axis direction such that the cut amounts at the plurality of positions in the Z-axis direction are each greater than or equal to the minimum cut amount and a cut-off sectional area in the Y-axis direction due to the cutting tool is minimum or close to minimum is determined, and a movement path of the cutting tool is controlled.

2. The method of repairing a surface of a slab according to Claim 1,

    wherein, in performing shape measurement of the slab side surface (s), at each of measurement positions (x) that are set at the predetermined intervals in the X-axis direction, a plurality of measurement points (a) at predetermined intervals in the Z-axis direction are set beforehand, and a minimum cut amount AEmin, which is a cut amount that is minimally necessary for surface repair, is set regarding a cut amount at each of the measurement points (a), and
    wherein, at each measurement position (x), Y-axis coordinates of the plurality of measurement points (a), which are set at the predetermined intervals in the Z-axis direction, are obtained by measurement using a distance-measuring device; a cutting tool cut-in position in the Y-axis direction such that a cut amount $AE_i$ at each measurement point (a) is greater than or equal to a minimum cut amount AEmin and a cut-off sectional area $Ta_i$ in the Y-axis direction due to the cutting tool is minimum or close to minimum is determined based on the Y-axis coordinate of each measurement point (a) and a known Y-axis coordinate of the cutting tool; and a movement path of the cutting tool in the X-axis direction and the Y-axis direction is controlled so that the cutting tool is located at the cutting tool cut-in position at each measurement position (x).

3. The method of repairing a surface of a slab according to Claim 2,
    wherein, at each measurement position (x), the cutting tool cut-in position in the Y-axis direction is determined through the following steps (i) to (iii), and the movement path of the cutting tool in the X-axis direction and the Y-axis direction is controlled so that the cutting tool is located at the cutting tool cut-in position at each measurement position (x):

    (i) the Y-axis coordinates of the plurality of measurement points (a) that are set at the predetermined intervals in the Z-axis direction are obtained by measurement using the distance-measuring device;

(ii) a cut amount $AE_{ip}$ at each of other measurement points ($a_p$) when a cut amount $AE_{ij}$ at an arbitrary measurement point ($a_j$) is assumed to be a predetermined minimum cut amount AEmin is obtained based on the Y-axis coordinate of each measurement point (a) obtained in (i) and the known Y-axis coordinate of the cutting tool, and, in a case where each cut amount $AE_{ip}$ is greater than or equal to the predetermined minimum cut amount AEmin, the cut-off sectional area $Ta_i$ in the Y-axis direction due to the cutting tool is obtained based on the cut amount $AE_{ij}$ at the measurement point ($a_j$) and the cut amount $AE_{ip}$ at each of the other measurement points ($a_p$); and

(iii) the cut-off sectional area $Ta_i$ in each case is obtained by performing calculation in (ii) regarding all of the measurement points (a), and a cutting tool cut-in position in a case where the cut-off sectional area $Ta_i$ is minimum or close to minimum is determined as a cutting tool cut-in position at the measurement position (x).

4. The method of repairing a surface of a slab according to any one of Claims 1 to 3, wherein a slab side surface region between a position of a slab upper surface and a slab thickness center portion or a position near a lower part thereof in the Z-axis direction is cut with one-stroke movement of the cutting tool.

5. The method of repairing a surface of a slab according to Claim 2 or 3,

wherein a slab side surface region between a position of a slab upper surface and a slab thickness center portion or a position near a lower part thereof in the Z-axis direction is cut with one-stroke movement of the cutting tool,
wherein, among the plurality of measurement points (a) that are set at the predetermined intervals in the Z-axis direction, an uppermost measurement point ($a_{01}$) and a lowermost measurement point ($a_{02}$) are imaginary measurement points for calculation and other measurement points ($a_1$) to ($a_n$) are actual measurement points,
wherein the uppermost measurement point ($a_{01}$) is located at or near the slab upper surface in the Z-axis direction, and a Y-axis coordinate thereof is set on an extension line of a straight line that connects, among the actual measurement points ($a_1$) to ($a_n$), an uppermost measurement point ($a_1$) and a measurement point ($a_2$) that is second from a top, and
wherein the lowermost measurement point ($a_{02}$) is located at or near the slab thickness center portion in the Z-axis direction, and a Y-axis coordinate thereof is set on an extension line of a straight line that connects, among the actual measurement points ($a_1$) to ($a_n$), a lowermost measurement point ($a_n$) and a measurement point ($a_{n-1}$) that is second from a bottom.

6. The method of repairing a surface of a slab according to any one of Claims 2, 3, and 5, wherein a minimum cut amount AEmin at each measurement point (a) is a cut amount that is minimally necessary to prevent generation of an uncut part in surface repair of the slab side surface (s) and is a cut amount that is set based on an empirical rule or/and a preliminary research.

7. The method of repairing a surface of a slab according to any one of Claims 2, 3, 5, and 6, wherein, among the plurality of measurement points (a) that are set at the predetermined intervals in the Z-axis direction, a minimum cut amount AEmin of an uppermost measurement point (a) is greater than a minimum cut amount AEmin of other measurement points (a).

8. The method of repairing a surface of a slab according to any one of Claims 2, 3, and 5 to 7, wherein a distance between the measurement points (a) that are adjacent to each other in the Z-axis direction is 50 mm or less.

9. The method of repairing a surface of a slab according to any one of Claims 2, 3, and 5 to 8, wherein the number of measurement points (a) at each measurement position (x) is three or more.

10. The method of repairing a surface of a slab according to any one of Claims 2, 3, and 5 to 9, wherein a distance between the measurement positions (x) that are adjacent to each other in the X-axis direction is 100 mm or less.

11. The method of repairing a surface of a slab according to any one of Claims 1 to 10, wherein an effective cutting length portion of the cutting tool has an inverted conical frustum shape.

12. The method of repairing a surface of a slab according to any one of Claims 1 to 11, wherein, in the Z-axis direction, [a height of an upper end of an effective cutting length portion of the cutting tool] $\geq$ [a height of a slab upper surface] and [a height of a lower end of the effective cutting length portion of the cutting tool] $\leq$ [a height of a slab thickness center portion].

# FIG. 1

SLAB

X-AXIS DIRECTION

Z-AXIS DIRECTION

Y-AXIS
DIRECTION

S

EACH POINT IS
MEASUREMENT POINT a

# FIG. 2

SLAB UPPER SURFACE

$a_{01}$

$a_1$

$a_2$

$a_3$

MEASURED SLAB
SECTION

$a_4$

SLAB THICKNESS
CENTER PORTION

$a_{02}$

FIG. 3

# FIG. 4

SLAB

S

—— MEASURED SHAPE OF SLAB SIDE SURFACE
---- ACTUAL SHAPE OF SLAB SIDE SURFACE

$a_{01}$

$a_1$

$a_2$

$a_3$

$a_4$

$a_{02}$

EP 3 957 422 A1

# FIG. 5

# FIG. 6

(a)

(b)

TOOL ROTATIONAL CENTER AXIS

4(4a)

TOOL-SECTION
EDGE-DEFINING LINE

$\alpha$

# FIG. 7

# FIG. 8

Z

Y

IMAGINARY MEASUREMENT POINT $a_{01}$
$(X_i, Ym_{i01}, Zm_{i01})$

MEASUREMENT POINT $a_1$
$(X_i, Ym_{i1}, Zm_{i1})$

MEASUREMENT POINT $a_2$
$(X_i, Ym_{i2}, Zm_{i2})$

IMAGINARY MEASUREMENT POINT $a_{01}$
$\Rightarrow$ CALCULATE Y-COORDINATE WHEN $Z=Zm_{i01}$
ON LINE $Z=au_iY+bu_i$ CONNECTING
MEASUREMENT POINTS $a_1$ AND $a_2$

MEASUREMENT POINT $a_3$
$(X_i, Ym_{i3}, Zm_{i3})$

MEASUREMENT POINT $a_4$
$(X_i, Ym_{i4}, Zm_{i4})$

MEASURED SLAB
SECTION

IMAGINARY MEASUREMENT POINT $a_{02}$
$(X_i, Ym_{i02}, Zm_{i02})$

IMAGINARY MEASUREMENT POINT $a_{02}$
$\Rightarrow$ CALCULATE Y-COORDINATE (OF SLAB
THICKNESS CENTER PORTION) WHEN
$Z=Zm_{i02}=Zt_i$ ON LINE $Z=ac_iY+bc_i$
CONNECTING MEASUREMENT POINTS $a_3$ AND $a_4$

$$au_i = \frac{Zm_{i1} - Zmi_2}{Ym_{i1} - Ymi_2}$$

$$bu_i = \frac{Zm_{i2}Ym_{i1} - Zm_{i1}Ym_{i2}}{Ym_{i1} - Ymi_2}$$

$$Ym_{i01} = \frac{Zm_{i01} - bu_i}{au_i}$$

$$ac_i = \frac{Zm_{i3} - Zmi_4}{Ym_{i3} - Ymi_4}$$

$$bc_i = \frac{Zm_{i4}Ym_{i3} - Zmi_3Ym_{i4}}{Ym_{i3} - Ymi_4}$$

$$Ym_{i02} = \frac{Zm_{i02} - bc_i}{ac_i}$$

EP 3 957 422 A1

# FIG. 9

UPPER TOOL DIAMETER Du OF
EFFECTIVE CUTTING LENGTH PORTION

EFFECTIVE CUTTING LENGTH
PORTION LENGTH Lb

4

4a

LOWER TOOL DIAMETER Dl OF
EFFECTIVE CUTTING LENGTH PORTION

# FIG. 10

Zug: GAP BETWEEN UPPER END OF TOOL
EFFECTIVE CUTTING LENGTH PORTION
AND SLAB UPPER SURFACE

e

$Zt_0$: Z-AXIS COORDINATE OF
TOOL HEIGHT REFERENCE LINE

TOOL HEIGHT REFERENCE LINE

IMAGINARY MEASUREMENT POINT $a_{01}$
$(X_i, Ym_{i01}, Zm_{i01})$

MEASUREMENT POINT $a_1$
$(X_i, Ym_{i1}, Zm_{i1})$

MEASUREMENT POINT $a_2$
$(X_i, Ym_{i2}, Zm_{i2})$

MEASUREMENT POINT a
$(X_i, Ym_{i3}, Zm_{i3})$

MEASURED SLAB
SECTION

MEASUREMENT POINT $a_4$
$(X_i, Ym_{i4}, Zm_{i4})$

IMAGINARY MEASUREMENT POINT $a_{02}$
$(X_i, Ym_{i02}, Zm_{i02})$

SLAB THICKNESS CENTER PORTION

$Zm_{i01}$: Z-AXIS COORDINATE OF
SLAB UPPER SURFACE

$Zm_{i02}$: Z-AXIS COORDINATE OF SLAB THICKNESS
CENTER PORTION

$ZD$: Z-AXIS COORDINATE OF DECK HEIGHT

$Lb$: EFFECTIVE CUTTING LENGTH PORTION LENGTH

4 (4a)

TOOL ROTATIONAL CENTER AXIS

TOOL EFFECTIVE CUTTING
LENGTH PORTION SECTION

Zm: GAP BETWEEN TOOL LOWER END
AND SLAB THICKNESS
CENTER PORTION

Zg: GAP BETWEEN TOOL LOWER END AND
DECK UPPER SURFACE

10

EP 3 957 422 A1

# FIG. 11

EP 3 957 422 A1

# FIG. 12

TOOL-SECTION EDGE-DEFINING POINT $b_{01}$
$(X_i, Yt_{i01}, Zt_{i01})$

TOOL-SECTION EDGE-DEFINING POINT $b_1$
$(X_i, Yt_{i1}, Zt_{i1})$

MEASURED SLAB SECTION

TOOL-SECTION EDGE-DEFINING POINT $b_2$
$(X_i, Yt_{i2}, Zt_{i2})$

TOOL-SECTION EDGE-DEFINING POINT $b_3$
$(X_i, Yt_{i3}, Zt_{i3})$

TOOL-SECTION EDGE-DEFINING POINT $b_4$
$(X_i, Yt_{i4}, Zt_{i4})$

TOOL TAPER SLOPE at

TOOL-SECTION EDGE-DEFINING LINE
$Z = at \cdot Y + bt$

TOOL-SECTION EDGE-DEFINING POINT $b_{02}$
$(X_i, Yt_{i02}, Zt_{i02})$

$Zm_{i01}$ TOOL HEIGHT REFERENCE LINE $Zt_0$

$AE_{i01}$ IMAGINARY MEASUREMENT POINT $a_{01}$
$(X_i, Ym_{i01}, Zm_{i01})$

$AE_{i1}$ MEASUREMENT POINT $a_1$
$(X_i, Ym_{i1}, Zm_{i1})$

MEASUREMENT POINT $a_2$
$(X_i, Ym_{i2}, Zm_{i2})$

$AE_{i2}$

$AE_{i3}$ MEASUREMENT POINT $a_3$
$(X_i, Ym_{i3}, Zm_{i3})$

$AE_{i4}$ MEASUREMENT POINT $a_4$
$(X_i, Ym_{i4}, Zm_{i4})$

IMAGINARY MEASUREMENT POINT $a_{02}$
$(X_i, Ym_{i02}, Zm_{i02})$

$AE_{i02}$

TOOL EFFECTIVE CUTTING LENGTH PORTION SECTION

TOOL ROTATIONAL CENTER AXIS

(LOWER TOOL DIAMETER DI OF EFFECTIVE CUTTING LENGTH PORTION)/2

EP 3 957 422 A1

# FIG. 13

### (a)
AREAS OF OVERLAPPED PORTIONS OF SLAB SECTION
AND TOOL SECTION  (CUT OFF SECTIONS $t_1$ TO $t_5$)
ARE SEQUENTIALLY CALCULATED

$AE_{i01}$

$\frac{1}{2}(Zm_{i01}-Zm_{i1}) (AE_{i01}+ AE_{i1})$

$AE_{i1}$

$\frac{1}{2}(Zm_{i1}-Zm_{i2}) (AE_{i1}+ AE_{i2})$

$AE_{i2}$

$AE_{i3}$

$AE_{i4}$

$AE_{i02}$

### (b)
AREAS OF PORTIONS CALCULATED IN (a)
(CUT OFF SECTIONS $t_1$ TO $t_5$)
ARE TOTALED

$AE_{i01}$

$AE_{i1}$

$AE_{i2}$

$AE_{i3}$

$AE_{i4}$

$AE_{i02}$

$$Ta_i = \sum_{j=0}^{N} \frac{1}{2}$$

# FIG. 14

# FIG. 15

# FIG. 16

**EP 3 957 422 A1**

<table>
<tr><td colspan="2">INTERNATIONAL SEARCH REPORT</td><td>International application No.</td></tr>
<tr><td colspan="2"></td><td>PCT/JP2019/047824</td></tr>
</table>

A. CLASSIFICATION OF SUBJECT MATTER
Int. Cl. B23C3/14(2006.01)i, B23C5/10(2006.01)i, B23Q17/20(2006.01)i,
B23Q15/013(2006.01)i
FI: B23C3/14, B23C5/10 D, B23Q15/013, B23Q17/20 A
According to International Patent Classification (IPC) or to both national classification and IPC

B. FIELDS SEARCHED

Minimum documentation searched (classification system followed by classification symbols)
Int. Cl. B23C3/14, B23C5/10, B23Q17/20, B23Q15/013

Documentation searched other than minimum documentation to the extent that such documents are included in the fields searched
Published examined utility model applications of Japan    1922-1996
Published unexamined utility model applications of Japan   1971-2020
Registered utility model specifications of Japan          1996-2020
Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2017-56491 A (JFE STEEL CORP.) 23 March 2017 | 1-12 |
| A | JP 2014-73507 A (JFE STEEL CORP.) 24 April 2014 | 1-12 |
| A | JP 2008-178933 A (KOBE STEEL, LTD.) 07 August 2008 | 1-12 |

☐ Further documents are listed in the continuation of Box C.      ☒ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
03.02.2020

Date of mailing of the international search report
18.02.2020

Name and mailing address of the ISA/
    Japan Patent Office
    3-4-3, Kasumigaseki, Chiyoda-ku,
    Tokyo 100-8915, Japan

Authorized officer

Telephone No.

Form PCT/ISA/210 (second sheet) (January 2015)

30

International application No.

PCT/JP2019/047824

| Patent Documents referred to in the Report | Publication Date | Patent Family | Publication Date |
|---|---|---|---|
| JP 2017-56491 A | 23.03.2017 | (Family: none) | |
| JP 2014-73507 A | 24.04.2014 | (Family: none) | |
| JP 2008-178933 A | 07.08.2008 | (Family: none) | |

Form PCT/ISA/210 (patent family annex) (January 2015)

**REFERENCES CITED IN THE DESCRIPTION**

**Patent documents cited in the description**

- JP 9108725 A
- JP 2016068251 A